# EUROPÄISCHE PATENTSCHRIFT

(11) **EP 2 338 836 B1**
(45) Veröffentlichungstag und Bekanntmachung des Hinweises auf die Patenterteilung: **13.11.2019**
(21) Anmeldenummer: 10015473.1
(22) Anmeldetag: 09.12.2010
(51) Int. Cl.: C02F 1/42, C02F 5/00

(54) **Mischmodul für eine Vorrichtung zur Wasserbehandlung**
Mixing module for a device for treating water
Module de mélange pour un dispositif de traitement d'eau

(30) Priorität: 23.12.2009 DE 102009060539
(43) Veröffentlichungstag der Anmeldung: 29.06.2011
(73) Patentinhaber: BWT Wassertechnik GmbH, 69198 Schriesheim (DE)
(72) Erfinder: Bergmann, Ralph, Dr., 69469 Weinheim (DE); Diehlmann, Rolf, 68623 Lampertheim (DE)
(74) Vertreter: Reiser & Partner Patentanwälte mbB

(56) Entgegenhaltungen:
- EP-A2- 0 184 084
- WO-A1-2007/089070
- DE-A1- 3 003 676
- DE-A1- 3 029 194
- DE-A1- 3 708 810
- DE-A1- 19 648 405
- GB-A- 1 535 941
- JP-A- 3 183 827

## Beschreibung

Die Erfindung betrifft ein Mischmodul für eine Vorrichtung zur Wasserbehandlung nach dem Oberbegriff von Anspruch 1. Die Erfindung betrifft darüber hinaus eine Vorrichtung zur Wasserbehandlung mit einem solchen Mischmodul.

Zur Trinkwasserbehandlung werden in häuslichen Installationen vor allem Ionentauscher genutzt. Diese sollen die Konzentration von Calciumionen und Magnesiumionen im Brauchwasser reduzieren. Im Hausbereich wird ein Ionenaustausch üblicherweise während des Durchflusses von Rohwasser durch eine Vorrichtung zur Wasserbehandlung durchgeführt.

Das in die Vorrichtung zur Wasserbehandlung einfließende Rohwasser fließt häufig durch einen starksauren Kationentauscher auf Natriumbasis. Hierdurch können nahezu alle im Rohwasser enthaltenen Calciumionen und Magnesiumionen gegen Natriumionen ausgetauscht werden. Sofern die Harzschüttung des Kationentauschers in korrekter Weise auf einen Volumenstrom an Rohwasser und dessen Konzentration an Calciumionen und Magnesiumionen abgestimmt ist, kann ein vollständiger Austausch aller Calciumionen und Magnesiumionen erzielt werden.

Eine Reduzierung der Konzentration an Calcium- und Magnesiumionen im Rohwasser ist oft erforderlich, da es bei der Erwärmung von Brauchwässern oder Trinkwässern mit hohen Konzentrationen an Calcium- und Hydrogencarbonationen zum Ausfallen von Calciumcarbonat, nämlich Kalk, kommen kann.

Doch auch schon relativ niedrige Konzentrationen an Calciumionen und Magnesiumionen können bei der Erwärmung von Wasser, beispielsweise durch Wärmetauscherplatten, zu technischen Problemen führen.

Insbesondere wenn bei der Erwärmung des Wassers Temperaturen von mehr als 60° C auftreten, ist eine vollständige Entfernung von Calciumionen und Magnesiumionen anzustreben. In Warmwassersystemen ist daher meist eine möglichst geringe Konzentration an Calciumionen und Magnesiumionen erwünscht, um den Ausfall von Kalk zu verhindern.

Insbesondere bei modernen Solaranlagen, bei denen Wärmetauscherplatten Verwendung finden, treten Temperaturen von weit mehr als 60° C auf. Bei starker Sonneneinstrahlung können sogar Temperaturen von mehr als 95° C auftreten. Je höher die Temperatur ist, desto höher ist die Gefahr einer Anlagerung von Kalk.

Bei der Verwendung von Rohrleitungen aus verzinktem Stahl allerdings wird eine Mindestkonzentration an Calciumionen und Magnesiumionen von 0,5 mol/m³ gefordert, um deren Korrosion zu vermeiden.

Des Weiteren wird Wasser, welches beispielsweise eine Restkonzentration von 0,75 - 1,5 mol/m³ an Calcium- und Magnesiumionen aufweist, in gesundheitlicher Hinsicht eine relativ hohe physiologische Qualität zugesprochen.

In einigen Fällen ist daher der vollständige Austausch von Calciumionen und Magnesiumionen ausdrücklich nicht erwünscht.

Ein Teil des Rohwassers kann dann nicht durch die Harzschüttung eines Ionentauschers geführt werden, sondern in einer Art Bypassleitung an dieser vorbeigeführt und mit einem Teilvolumenstrom des behandelten Wassers gemischt werden. Im Teilvolumenstrom des behandelten Wassers sind Calciumionen und Magnesiumionen vollständig gegen Natriumionen ausgetauscht worden. Durch geeignete Einstellung der Teilvolumenströme behandelten Wassers und Rohwassers kann für den Endverbraucher Brauchwasser mit definierter Konzentration an Calciumionen und Magnesiumionen erzeugt werden. Dieses Prinzip ist in der DE 196 48 405 A1 dargestellt.

An die dem Endverbraucher zugeführten Brauchwässer bestehen, wie zuvor ausgeführt, häufig stark unterschiedliche Anforderungen.

Es besteht daher ein Bedarf nach einer Ergänzung der bekannten Vorrichtungen zur Wasserbehandlung, die sicherstellt, dass die dem Endverbraucher zur Verfügung gestellten Brauchwässer problemlos an unterschiedliche technische und/oder gesundheitliche Anforderungen anpassbar sind.

Die DE 196 48 405 A1 beschreibt eine Anschlusseinheit für Großgeräte-Wasserfilter mit einer in den Filter hineinführenden Zulaufleitung und einer aus dem Filter herausführenden Ablaufleitung. Die Anschlusseinheit ist mit einem Dosierventil versehen, das eine einstellbare Verschneidung von Wasser in der Ablaufleitung erlaubt.

Die DE 30 29 194 A1 beschreibt eine Verschneidevorrichtung für Wasserenthärtungsanlagen. Das Rohwasser wird über einen S-förmig gekrümmten Kanal einer Wasserenthärtungseinrichtung zugeführt, während das enthärtete Wasser über einen S-förmig gekrümmten Kanal in eine weiterführende Leitung gelangt.

Die DE 37 08 810 A1 beschreibt einen Enthärter-Verteiler zur Weich- und Hartwasserverteilung einer Wasser-Enthärtungsanlage. Der Enthärter-Verteiler ist als Mischbalken ausgebildet. Durch den Enthärter-Verteiler ist der Härtegrad je Zapf-/Abnahmestelle unterschiedlich einstellbar. Der Mischbalken wird über eine Rohrleitung an die Enthärtungsanlage angeschlossen, die das Weichwasser bereitstellt. Der Mischbalken weist zudem einen Rohwasseranschluss auf.

Der Erfindung liegt demgegenüber die Aufgabe zugrunde, ein Mischmodul der eingangs genannten Art derart auszugestalten und weiterzubilden, dass dieses einem Endverbraucher verschiedene Brauchwasserströme mit unterschiedlichen Qualitäten, z.B. mit unterschiedlichen Ionenkonzentrationen, bereitstellen kann und darüber hinaus einfach an eine Vorrichtung zur Wasserbehandlung anschließbar ist.

Erfindungsgemäß wird die voranstehende Aufgabe durch ein Mischmodul mit den Merkmalen des Patentanspruchs 1 gelöst.

Danach weist das eingangs genannte Mischmodul unter anderem eine zweite Auslassleitung für Brauchwasser einer zweiten Qualität auf.

Erfindungsgemäß ist erkannt worden, dass mittels eines einzigen Bauelements, welches z.B. an eine Vorrichtung zur Wasserbehandlung anflanschbar ist, gleichzeitig zwei Brauchwasserströme mit unterschiedlichen Wasserqualitäten erzeugt werden können. Weiter ist erkannt worden, dass sich die erzeugten Brauchwasserströme vorzugsweise in Bezug auf ihre Calciumionen- und Magnesiumionenkonzentrationen unterscheiden können. Schließlich ist erkannt worden, dass die erste Mischeinrichtung beispielsweise die Wasserqualität für einen Kaltwasseranschluss steuern kann. Insoweit ist ein Mischmodul angegeben, welches dem Endverbraucher gleichzeitig verschiedene Brauchwasserströme mit unterschiedlichen Qualitäten wie insbesondere unterschiedlichen Ionenkonzentrationen bereitstellen kann.

Das Brauchwasser der zweiten Qualität kann insbesondere durch eine zweite Ionenkonzentration ausgezeichnet sein, welche von einer ersten Ionenkonzentration des Brauchwassers der ersten Qualität verschieden ist. Hierdurch kann auf einfache Weise in einer Hausinstallation Brauchwasser mit unterschiedlichen Ionenkonzentrationen z.B. für Warm- und Kaltwasser, bereitgestellt werden.

Vorteilhafterweise könnte eine zweite Mischeinrichtung vorgesehen sein, durch welche die zweite Qualität einstellbar ist. Dies ermöglicht es, beide Wasserqualitäten unabhängig einzustellen. Beispielsweise kann durch die erste Mischeinrichtung die erste Wasserqualität eingestellt werden, welche für ein Kaltwassersystem genutzt wird. Über die zweite Mischeinrichtung kann unabhängig davon die zweite Wasserqualität eingestellt werden, welche für ein Warmwassersystem genutzt wird. Auf diese Weise lassen sich die unterschiedlichen Anforderungen im Kalt- und Warmwassersystem erfüllen.

Die zweite Mischeinrichtung könnte unabhängig von der ersten Mischeinrichtung bedienbar sein, wobei die zweite Qualität unabhängig oder nahezu unabhängig von der ersten Qualität einstellbar ist. Hierdurch kann der Installateur oder der Endverbraucher die Brauchwässer jederzeit an die jeweiligen Erfordernisse anpassen.

Durch die erste Mischeinrichtung könnte dem von der Vorrichtung zur Wasserbehandlung behandelten Wasser Rohwasser beimischbar sein, um das Brauchwasser der ersten Qualität zu erzeugen. Hierdurch kann z.B. das Brauchwasser problemlos aus einer Mischung aus Wasser einer höheren Ionenkonzentration und Wasser einer niedrigeren Ionenkonzentration erzeugt werden.

Vor diesem Hintergrund könnte durch die zweite Mischeinrichtung dem von der Vorrichtung zur Wasserbehandlung behandelten Wasser Rohwasser beimischbar sein, um das Brauchwasser der zweiten Qualität zu erzeugen. Durch diese konkrete Ausgestaltung können aus einem Rohwasserstrom vorzugsweise zwei Brauchwasserströme mit unterschiedlichen Ionenkonzentrationen erzeugt werden. Die zweite Mischeinrichtung ermöglicht, beide Wasserqualitäten einstellen zu können. Daher kann beispielsweise für beide Wasserqualitäten ein gewünschter Gehalt an Calcium- und Magnesiumionen auch dann eingestellt werden, wenn die Wasserbehandlungsvorrichtung ein vollständig oder nahezu vollständig von Calcium- und Magnesiumionen befreites behandeltes Wasser bereitstellt.

Die erste Mischeinrichtung verbindet einen ersten Rohwasserkanal, der mit der Einlassleitung strömungsverbunden ist, mit einem ersten Mischkanal, welcher mit der ersten Auslassleitung verbunden ist. Hierdurch kann der ersten Auslassleitung Rohwasser zugeführt werden, um behandeltem Wasser Rohwasser beizumischen.

Der erste Rohwasserkanal mündet in einen Rohwasserringraum, welcher die Einlassleitung umgibt, wobei in der Wandung der Einlassleitung ein erster Rohwasserdurchgang ausgebildet ist, der den Rohwasserringraum mit dem Inneren der Einlassleitung verbinden. Durch den ersten Rohwasserdurchgang kann Rohwasser in den Rohwasserringraum gelangen. Vorzugsweise können hier z.B. vier um 90° umfänglich versetzte Durchlässe angeordnet sein. Der Rohwasserringraum kann vorteilhaft in einer Aussparung des Grundkörpers ausgebildet sein, in welchen die Einlassleitung als ganzes einsteckbar ist.

Der erste Mischkanal mündet in einen ersten Brauchwasserringraum, welcher die erste Auslassleitung umgibt, wobei in der Wandung der ersten Auslassleitung ein erster Brauchwasserdurchgang ausgebildet ist, der den Brauchwasserringraum mit dem Inneren der ersten Auslassleitung verbindet. Durch eine Sogwirkung, die von dem aus der ersten Auslassleitung ausströmenden Brauchwasser erzeugt wird (bzw. über eine Druckdifferenz), kann über den ersten Mischkanal beigemischtes Rohwasser in den Brauchwasserringraum gesogen werden. Von dort kann das beigemischte Rohwasser durch den ersten Brauchwasserdurchgang in die erste Auslassleitung gelangen. Vorzugsweise können hier vier um 90° umfänglich versetzte Durchlässe angeordnet sein. Der erste Brauchwasserringraum kann vorteilhaft in einer Aussparung des Grundkörpers ausgebildet sein, in welchen die erste Auslassleitung als ganzes einsteckbar ist.

Die erste Mischeinrichtung könnte ein Steuerelement aufweisen, durch welches das Maß der Strömungsverbindung zwischen dem ersten Rohwasserkanal und dem ersten Mischkanal einstellbar ist. Hierdurch kann die Menge an beigemischtem Rohwasser problemlos eingestellt werden.

Vor diesem Hintergrund könnte das Steuerelement händisch oder automatisch mittels eines Stellmotors bedienbar sein. Hierdurch kann der Endverbraucher ohne Werkzeuge die erste Ionenkonzentration des aus der ersten Auslassleitung austretenden Brauchwassers bedarfsgerecht einstellen.

Die zweite Mischeinrichtung könnte einen zweiten Rohwasserkanal, der mit der Einlassleitung strömungsverbunden ist, mit einem zweiten Mischkanal verbinden, welcher mit der Zuleitung für behandeltes Wasser verbunden ist. Hierdurch kann dem behandelten Wasser, welches aus der Vorrichtung zur Wasserbehandlung austritt, unbehandeltes Wasser beigemischt werden. Vorzugsweise kann dem behandelten Wasser unbehandeltes Wasser mit einem Anteil von 0% bis 50% unbehandelten Wassers beigemischt werden.

Der zweite Rohwasserkanal könnte in den Rohwasserringraum münden, welcher die Einlassleitung umgibt, wobei in der Wandung der Einlassleitung zweite Rohwasserdurchgänge ausgebildet sind, die den Rohwasserringraum mit dem Inneren der Einlassleitung verbinden. Durch den zweiten Rohwasserdurchgang kann Rohwasser in den Rohwasserringraum gelangen. Vorzugsweise können hier vier um 90° umfänglich versetzte Durchlässe angeordnet sein. Der Rohwasserringraum kann vorteilhaft in einer Aussparung des Grundkörpers ausgebildet sein, in welchen die Einlassleitung als ganzes einsteckbar ist.

Der zweite Mischkanal könnte in einen zweiten Brauchwasserringraum münden, welcher die Zuleitung umgibt, wobei in der Wandung der Zuleitung ein zweiter Brauchwasserdurchgang ausgebildet ist, der den zweiten Brauchwasserringraum mit dem Inneren der Zuleitung verbinden. Vorzugsweise können hier vier um 90° umfänglich versetzte Durchlässe angeordnet sein. Der zweite Brauchwasserringraum kann vorteilhaft in einer Aussparung des Grundkörpers ausgebildet und vom ersten Brauchwasserringraum baulich getrennt sein.

Die zweite Mischeinrichtung könnte ein Stellelement aufweisen, durch welches das Maß der Strömungsverbindung zwischen dem zweiten Rohwasserkanal und dem zweiten Mischkanal einstellbar ist. Hierdurch kann die zweite Ionenkonzentration des Brauchwassers eingestellt werden, welches aus der zweiten Auslassleitung austritt.

Das Stellelement könnte fest eingestellt sein. Das Stellelement kann vorzugsweise nicht händisch, sondern nur mit Werkzeugen bedient werden. Hierdurch ist sicher gestellt, dass technisch erforderliche Ionenkonzentrationen, beispielsweise für verzinkte Stahlrohre, eingehalten werden.

Der zweite Rohwasserkanal und der zweite Mischkanal könnten in eine Mischkammer münden, von der ein Ableitungskanal zur zweiten Auslassleitung führt, wobei der Ableitungskanal durch ein Absperrelement verschließbar ist. Hierdurch wird die Montage und Wartung des Mischmoduls erleichtert.

Zwischen der ersten Auslassleitung und der Zuleitung könnte ein Rückflussverhinderungselement angeordnet sein, welches den Rückfluss von Brauchwasser aus der ersten Auslassleitung in die Zuleitung verhindert. Vorteilhaft können die erste Auslassleitung und die Zuleitung kolinear angeordnet sein. Hierbei ist insbesondere denkbar, dass die erste Auslassleitung und die Zuleitung einstückig, nämlich als Rohr, ausgebildet sind. Das Rückflussverhinderungselement kann als Rückschlagventil ausgestaltet sein.

Das in die Zuleitung einfließende behandelte Wasser, welches von der Vorrichtung zur Wasserbehandlung nahezu völlig von Calciumionen und Magnesiumionen befreit wurde, könnte von einem Durchflussmesser erfasst werden. Hierdurch ist gewährleistet, dass die Regeneration des Ionentauschers zu einem geeigneten Zeitpunkt erfolgt. Vorteilhaft erfasst der Durchflussmesser das behandelte Wasser vor dessen Vermischung mit Rohwasser.

Eine weitere Verbesserung ergibt sich, wenn das Mischmodul an eine Vorrichtung zur Wasserbehandlung anflanschbar ist. Hierzu können die Anschlüsse des Mischmoduls entsprechend ausgebildet sein, so dass das Mischmodul direkt an die Vorrichtung zur Wasserbehandlung angeschlossen werden kann. Auf diese Weise kann eine Vorrichtung zur Wasserbehandlung ohne Veränderung und ggf. auch nachträglich mit dem Mischmodul und der sich daraus ergebenden erweiterten Funktionalität ausgestattet werden.

Die vorbeschriebenen Elemente des Mischmoduls können auch direkt in einer Vorrichtung zur Wasserbehandlung vorgesehen sein. Eine solche Vorrichtung zur Wasserbehandlung umfasst eine Einlassleitung für Rohwasser, eine Zuleitung für von der Vorrichtung zur Wasserbehandlung behandelten Wassers, eine erste Auslassleitung für Brauchwasser einer ersten Qualität und einer ersten Mischeinrichtung, um das Brauchwasser einer ersten Qualität zu erzeugen. Weiterhin ist eine zweite Auslassleitung für Brauchwasser einer zweiten Qualität vorgesehen. Die Vorrichtung zur Wasserbehandlung enthält zudem die weiteren im Zusammenhang mit dem erfindungsgemäßen Mischmodul beschriebenen Merkmale. Die Vorrichtung zur Wasserbehandlung kann zudem in vorteilhafter Weise die weiteren im Zusammenhang mit dem Mischmodul beschriebenen Merkmale, insbesondere auch eine zweite Mischeinrichtung, aufweisen. Auf die diesbezüglichen Ausführungen, welche entsprechend für die Ausgestaltung der Vorrichtung zur Wasserbehandlung gelten, wird Bezug genommen.

Weitere Ziele, Merkmale, Vorteile und Anwendungsmöglichkeiten der vorliegenden Erfindung ergeben sich aus der nachfolgenden Beschreibung eines Ausführungsbeispiels anhand der Zeichnung.

In der Zeichnung zeigen
- Fig. 1: eine perspektivische Ansicht des Mischmoduls, wobei eine Ansicht der Einlassleitung, der ersten Auslassleitung und der zweiten Auslassleitung gezeigt ist,
- Fig. 2: eine mit Bezug auf Fig. 1 verdrehte perspektivische Ansicht des Mischmoduls, wobei eine Ansicht der Einlassleitung, der ersten Auslassleitung und der zweiten Auslassleitung gezeigt ist,
- Fig. 3: eine Schnittansicht des Mischmoduls gemäß Fig. 1 und 2, wobei in Bezug auf Fig. 1 und 2 ein Vertikalschnitt durch die Ebene der ersten Mischeinrichtung gezeigt ist,
- Fig. 4: eine Schnittansicht des Mischmoduls gemäß Fig. 1 und 2, wobei in Bezug auf Fig. 1 und 2 ein Horizontalschnitt durch die Einlassleitung, die Zuleitung und die erste Auslassleitung gezeigt ist,
- Fig. 5: eine Schnittansicht des Mischmoduls gemäß Fig. 1 und 2, wobei in Bezug auf Fig. 1 und 2 ein Vertikalschnitt durch die Ebene der zweiten Mischeinrichtung gezeigt ist,
- Fig. 6: eine Schnittansicht des Mischmoduls gemäß Fig. 1 und 2, wobei in Bezug auf Fig. 1 und 2 ein Vertikalschnitt durch die Ebene der ersten Auslassleitung gezeigt ist, und
- Fig. 7: eine Schnittansicht des Mischmoduls gemäß Fig. 1 und 2, wobei in Bezug auf Fig. 5 eine Draufsicht in Pfeilrichtung auf einen Vertikalschnitt entlang der gestrichelten Linie gezeigt ist.

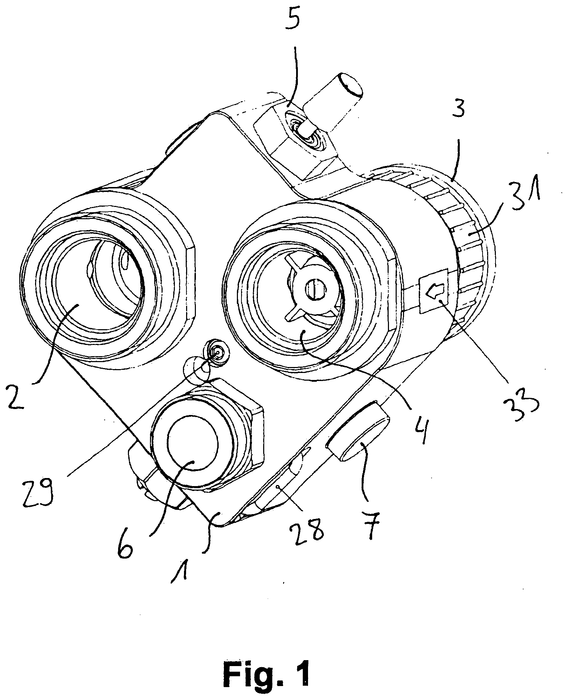

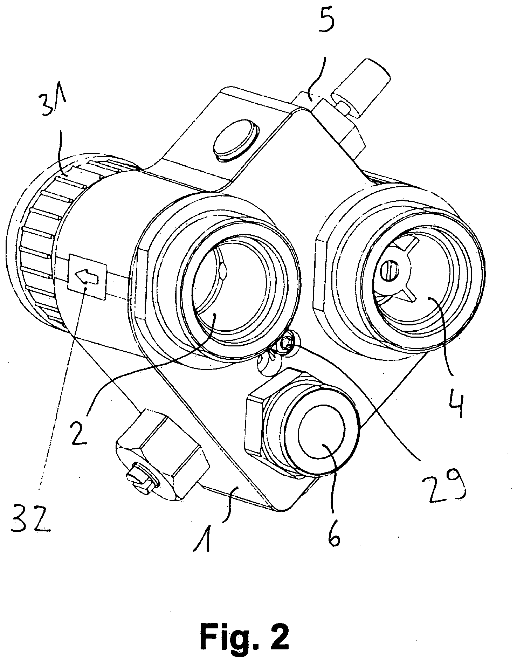

Die Fig. 1 und 2 zeigen ein direkt an eine Wasserbehandlungsvorrichtung anflanschbares Mischmodul, umfassend einen Grundkörper 1 mit einer Einlassleitung 2 für Rohwasser, an der eine nicht dargestellten Wasserzuleitung angeschlossen werden kann. Die Einlassleitung 2 mündet in den auf der gegenüberliegenden Seite des Mischmoduls angeordneten Rohwasserauslass 2', an den eine nicht dargestellte Vorrichtung zur Wasserbehandlung angeschlossen und mit Rohwasser versorgt werden kann. Weiterhin weist das Mischmodul eine Zuleitung 3 für von der Vorrichtung zur Wasserbehandlung behandelten Wassers auf, welches an dem entsprechenden Anschluss der Vorrichtung zur Wasserbehandlung angeschlossen werden kann. Hierzu sind der Anschluss 2' und die Zuleitung 3 nebeneinander derart angeordnet, dass diese problemlos mit den entsprechenden Anschlüssen einer Vorrichtung zur Wasserbehandlung angeschlossen werden können. Dies ermöglicht es, das als separates Bauteil ausgebildete Mischmodul bei Bedarf an der Vorrichtung zur Wasserbehandlung anzuschließen, ohne dass hierzu eine Änderung an der Vorrichtung vorgenommen werden müsste. Alternativ ist es möglich, das Mischmodul in die Vorrichtung zur Wasserbehandlung zu integrieren. Aufgrund des modularen Aufbaus ist es möglich, den Einsatzbereich der Wasserbehandlungsvorrichtung zu erweitern, ohne dass hierfür kostspielige Änderungen vorgenommen werden müssten. Vorteilhaft ist hierbei die Zusammenfassung der beschriebenen Komponenten in dem Modul. Die Vorrichtung zur Wasserbehandlung kann insbesondere einen starksauren Kationentauscher auf Natriumbasis enthalten, der im Wasser enthaltene Calciumionen und Magnesiumionen gegen Natriumionen austauscht.

Das Mischmodul weist eine ersten Auslassleitung 4 für Brauchwasser einer ersten Ionenkonzentration und eine erste Mischeinrichtung 5 auf, um das Brauchwasser einer ersten Ionenkonzentration bereitzustellen. Die erste Auslassleitung 4 wird vorzugsweise an die Zuleitung für die Kaltwasserleitungen einer Hausinstallation angeschlossen.

Das Mischmodul weist eine zweite Auslassleitung 6 für Brauchwasser einer zweiten Ionenkonzentration auf, wobei eine zweite Mischeinrichtung 7 vorgesehen ist, durch welche die zweite Ionenkonzentration einstellbar ist. Die zweite Auslassleitung 6, welche bei dem dargestellten Ausführungsbeispiel einen kleineren Querschnitt aufweist als die erste Auslassleitung, wird vorzugsweise an die Zuleitung für die Warmwasserleitungen der Hausinstallation angeschlossen. Die erste Auslassleitung 4, die zweite Auslassleitung 6 und der erste Anschluss sind auf der dem Rohwasserauslass 2' gegenüberliegenden Seite des Mischmoduls angeordnet.

Die zweite Mischeinrichtung 7 ist unabhängig von der ersten Mischeinrichtung 5 bedienbar, wobei die zweite Ionenkonzentration unabhängig oder nahezu unabhängig von der ersten Ionenkonzentration einstellbar ist. Auf diese Weise ist es möglich, zwei Wasserqualitäten bereitzustellen.

Durch die erste Mischeinrichtung 5 ist dem von der Vorrichtung zur Wasserbehandlung behandelten Wasser Rohwasser beimischbar, um das Brauchwasser mit der gewünschten ersten Ionenkonzentration zu erzeugen, das durch die erste Auslassleitung 4 abgegeben wird. Durch die zweite Mischeinrichtung 7 ist dem von der Vorrichtung zur Wasserbehandlung behandelten Wasser Rohwasser beimischbar, um das Brauchwasser mit der gewünschten zweiten Ionenkonzentration zu erzeugen, das durch die zweite Auslassleitung 6 abgegeben wird.

In Fig. 2 zeigt der erste Pfeil 32 die Strömungsrichtung des Rohwassers an. In Fig. 1 zeigt der zweite Pfeil 33 die Strömungsrichtung des Brauchwassers an. Der erste Pfeil 32 ist auf dem Grundkörper 1 im Bereich der Einlassleitung 2 angebracht. Der zweite Pfeil 33 ist auf dem Grundkörper im Bereich der ersten Auslassleitung 4 angebracht.

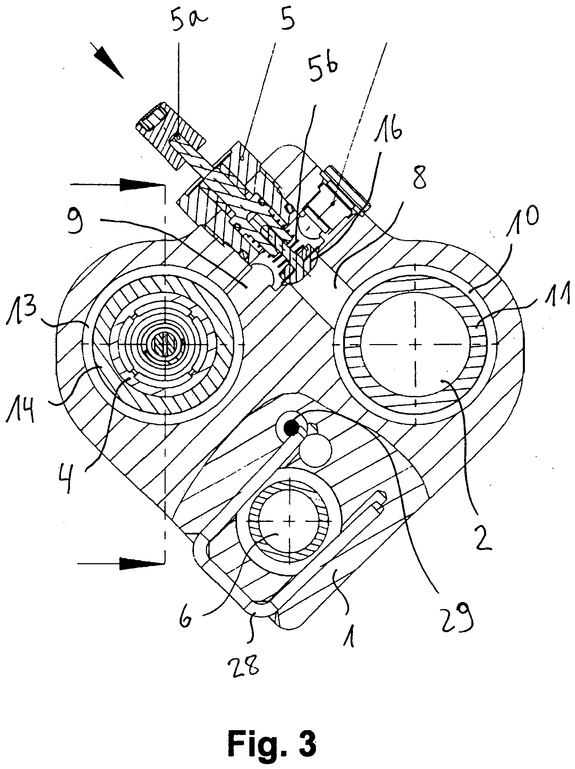

Fig. 3 zeigt eine Schnittansicht des Mischmoduls gemäß Fig. 1 und 2, wobei in Bezug auf Fig. 1 und 2 ein Vertikalschnitt durch die Ebene der ersten Mischeinrichtung 5 gezeigt ist. Fig. 3 zeigt in dieser Schnittansicht, dass die erste Mischeinrichtung 5 einen ersten Rohwasserkanal 8, der mit der Einlassleitung 2 strömungsverbunden ist, mit einem ersten Mischkanal 9 verbindet, welcher in die erste Auslassleitung 4 mündet. Fig. 3 zeigt weiter, dass der erste Rohwasserkanal 8 in einen Rohwasserringraum 10 mündet, welcher die Einlassleitung 2 umgibt. Auf diese Weise kann dem behandelten Wasser, welches durch die Zuleitung 3 in das Mischmodul eintritt, durch die Mischeinrichtung 5 die gewünschte Menge an Rohwasser aus der Einlassleitung 2 zugeführt werden, um den gewünschten Gehalt an Ionen zu erreichen.

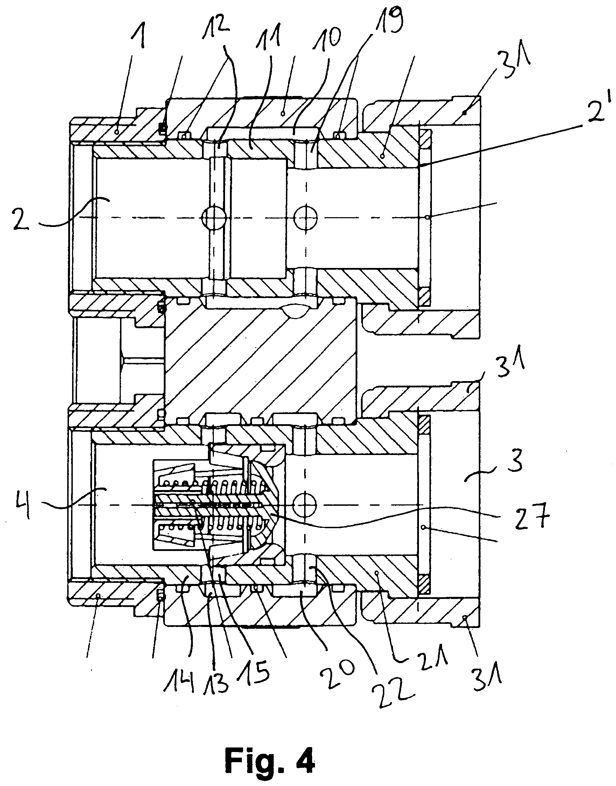

Fig. 4 zeigt eine Schnittansicht des Mischmoduls gemäß Fig. 1 und 2, wobei in Bezug auf Fig. 1 und 2 ein Horizontalschnitt durch die Einlassleitung 2, die Zuleitung 3 und die erste Auslassleitung 4 gezeigt ist. Fig. 4 zeigt, dass in der Wandung 11 der Einlassleitung 2 ein erster Rohwasserdurchgang 12 ausgebildet ist, der den Rohwasserringraum 10 mit dem Inneren der Einlassleitung 2 verbindet. Bei der dargestellten Ausführungsform weist der erste Rohwasserdurchgang 12 vier Durchlässe auf, die an dem Umfang um 90° versetzt angeordnet sind.

Fig. 3 zeigt, dass der erste Mischkanal 9 in einen ersten Brauchwasserringraum 13 mündet, welcher die erste Auslassleitung 4 umgibt. Fig. 4 zeigt, dass in der Wandung 14 der ersten Auslassleitung 4 der erste Brauchwasserdurchgang 15 ausgebildet ist, der den Brauchwasserringraum 13 mit dem Inneren der ersten Auslassleitung 4 verbindet. Hierbei weist bei der dargestellten Ausführungsform der erste Brauchwasserdurchgang 15 vier am Umfang um 90° versetzt angeordnet Durchlässe auf.

Fig. 3 zeigt, dass die erste Mischeinrichtung 5 ein als Mischventil ausgebildetes Steuerelement 16 aufweist, durch welches das Maß der Strömungsverbindung zwischen dem ersten Rohwasserkanal 8 und dem ersten Mischkanal 9 einstellbar ist. Das Steuerelement 16 ist händisch, nämlich ohne Werkzeuge, über einen vom Grundkörper 1 abragenden Drehknopf 5a bedienbar.

Durch Drehen des Drehknopfs 5a kann das stempelförmige oder pilzförmige Steuerelement 16 längs der Achse des ersten Rohwasserkanals 8 verfahren werden. Hierdurch kann der erste Rohwasserkanal 8 vom ersten Mischkanal 9 abgetrennt oder mit diesem strömungsverbunden werden. Das Maß der Strömungsverbindung wird durch die jeweilige Stellung des Steuerelements 16 festgelegt. Das Steuerelement 16 ist federbeaufschlagt in der ersten Mischeinrichtung 5 aufgenommen. Eine Feder 5b drückt das Steuerelement 16 in Richtung des ersten Rohwasserkanals 8.

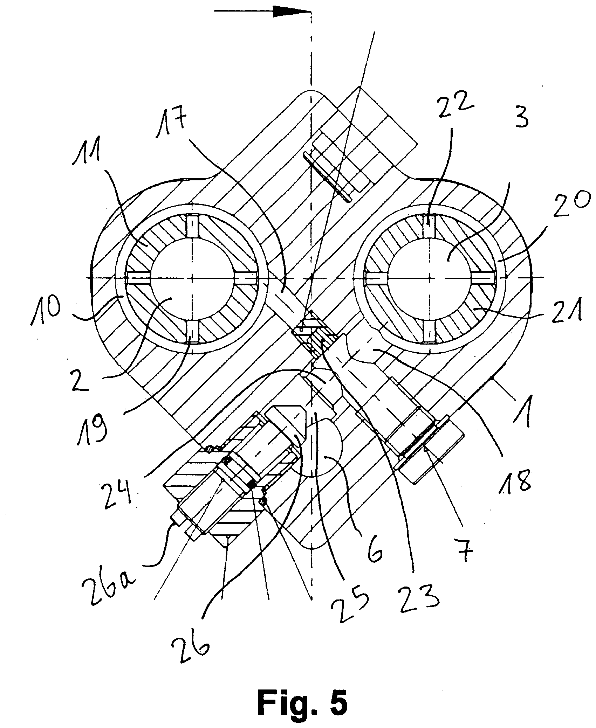

Fig. 5 zeigt eine Schnittansicht des Mischmoduls gemäß Fig. 1 und 2, wobei in Bezug auf Fig. 1 und 2 ein Vertikalschnitt durch die Ebene der zweiten Mischeinrichtung 7 gezeigt ist. Diese Ebene der zweiten Mischeinrichtung 7 ist dabei zwischen der Ebene der ersten Mischeinrichtung 5 und dem Anschluss 2' angeordnet. Die zweite Mischeinrichtung 7 verbindet einen zweiten Rohwasserkanal 17, der mit der Einlassleitung 2 strömungsverbunden ist, mit einem zweiten Mischkanal 18, welcher mit der Zuleitung 3 für behandeltes Wasser verbunden ist. Der zweite Rohwasserkanal 17 mündet in den Rohwasserringraum 10, welcher die Einlassleitung 2 umgibt.

Fig. 5 zeigt, dass in der Wandung 11 der Einlassleitung 2 ein zweiter Rohwasserdurchgang 19 ausgebildet ist, der den Rohwasserringraum 10 mit dem Inneren der Einlassleitung 2 verbinden. Hierbei weist der zweite Rohwasserdurchggan 19 vier am Umfang um 90° versetzt angeordnete Durchlässe auf.

Fig. 5 zeigt, dass der zweite Mischkanal 18 in einen zweiten Brauchwasserringraum 20 mündet, welcher die Zuleitung 3 umgibt, wobei in der Wandung 21 der Zuleitung 3 zweite Brauchwasserdurchgänge 22 ausgebildet sind, die den zweiten Brauchwasserringraum 20 mit dem Inneren der Zuleitung 3 verbinden. Hierbei ist vorgesehen, dass der zweite Brauchwasserdurchgang 22 vier am Umfang um 90° versetzt angeordnet Durchlässe aufweist.

Die zweite Mischeinrichtung 7 weist ein Stellelement 23 auf, durch welches das Maß der Strömungsverbindung zwischen dem zweiten Rohwasserkanal 17 und dem zweiten Mischkanal 18 einstellbar ist. Auf diese Weise kann der Ionengehalt des aus der zweiten Auslassleitung 6 austretenden Wasser unabhängig eingestellt werden. Das Stellelement 23 kann mit einem Werkzeug betätigt werden. Vorzugsweise liegt die Beimischung des unbehandelten Wassers, je nach Anwendung und der Qualität des unbehandelten Wassers, zwischen 0% und 50%. Die Mischeinrichtung weist hierzu einen entsprechenden Einstellbereich auf.

Der zweite Rohwasserkanal 17 und der zweite Mischkanal 18 münden in eine Mischkammer 24, von der ein Ableitungskanal 25 zur zweiten Auslassleitung 6 führt. Der Ableitungskanal 25 ist durch ein Absperrelement 26 verschließbar. Das Absperrelement 26 ist durch Drehen eines Schraubenkopfs 26a längs der Achse des zweiten Mischkanals 18 und des kolinear angeordneten Ableitungskanals 25 verschiebbar. Durch das Absperrelement 26 ist der Ableitungskanal 25 von der Mischkammer 24 abtrennbar.

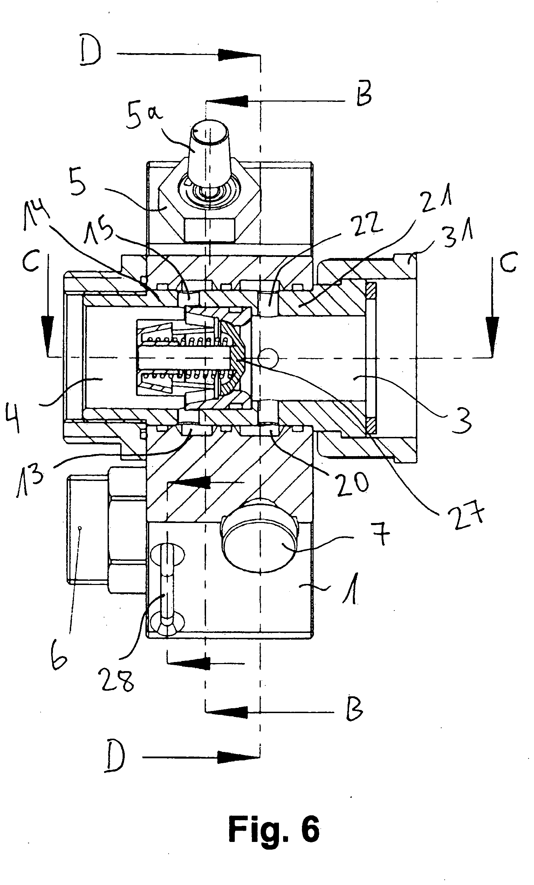

Fig. 6 zeigt eine teilweise Schnittansicht des Mischmoduls gemäß Fig. 1 und 2, wobei in Bezug auf Fig. 1 und 2 ein Vertikalschnitt durch die Ebene der ersten Auslassleitung 4 gezeigt ist. Fig. 6 zeigt, dass die erste Auslassleitung 4 und die Zuleitung 3 kolinear angeordnet sind. Zwischen der ersten Auslassleitung 4 und der Zuleitung 3 ist ein federgelagertes Rückflussverhinderungselement 27 angeordnet, welches den Rückfluss von Brauchwasser aus der ersten Auslassleitung 4 in die Zuleitung 3 verhindert.

Die Ansicht auf den Schnitt gemäß Schnittlinien B-B in Fig. 6 entspricht Fig. 3. Die Ansicht auf den Schnitt gemäß Schnittlinien C-C in Fig. 6 entspricht Fig. 4. Die Ansicht auf den Schnitt gemäß Schnittlinien D-D in Fig. 6 entspricht Fig. 5.

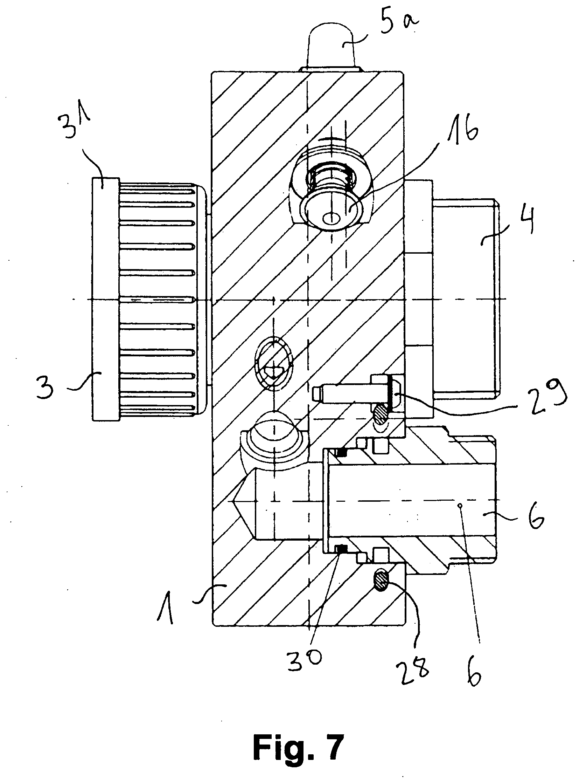

Fig. 7 zeigt eine Schnittansicht des Mischmoduls gemäß Fig. 1 und 2, wobei in Bezug auf Fig. 5 eine Draufsicht in Pfeilrichtung auf einen Vertikalschnitt entlang der vertikal gestrichelten Linie in Fig. 5 gezeigt ist. Die zweite Auslassleitung 6 ist als Rohrstutzen ausgebildet, der durch eine U-förmige Federklammer 28 im Grundkörper 1 befestigt ist. Die Federklammer 28 ist durch eine Schraube 29 im Grundkörper fixiert. Die zweite Auslassleitung 6 ist durch eine Dichtung 30 gegen den Grundkörper 1 abgedichtet.

In den Fig. 1, 2, 4, 6 und 7 sind drehbare Schraubverschlüsse 31 gezeigt, die an der Einlassleitung 2 sowie an der Zuleitung 3 angeordnet sind. Durch die Schraubverschlüsse 31 ist das Mischmodul problemlos und ohne Werkzeuge an eine hier nicht gezeigte Vorrichtung zur Wasserbehandlung anflanschbar.

Die Einlassleitung 2 wird über den Rohwasserauslass 2' mit dem Rohwasseranschluss der Vorrichtung zur Wasserbehandlung verbunden. Die Zuleitung 3 wird mit dem Anschluss für behandeltes Wasser der Vorrichtung zur Wasserbehandlung verbunden. Die Einlassleitung 2 wird von Rohwasser durchströmt, so dass das Rohwasser in den Rohwasseranschluss der Vorrichtung zur Wasserbehandlung eintreten kann.

Hinsichtlich weiterer vorteilhafter Ausgestaltungen und Weiterbildungen der erfindungsgemäßen Lehre wird einerseits auf den allgemeinen Teil der Beschreibung und andererseits auf die Patentansprüche verwiesen.

## Patentansprüche

1. Mischmodul für eine Vorrichtung zur Wasserbehandlung, umfassend einen Grundkörper (1) mit einer Einlassleitung (2) für Rohwasser, einer Zuleitung (3) für von der Vorrichtung zur Wasserbehandlung behandeltes Wasser einer ersten Auslassleitung (4) für Brauchwasser einer ersten Qualität, einer ersten Mischeinrichtung (5), um das Brauchwasser einer ersten Qualität zu erzeugen, und mit einer zweiten Auslassleitung (6) für Brauchwasser einer zweiten Qualität, wobei die erste Mischeinrichtung (5) einen ersten Rohwasserkanal (8), der mit der Einlassleitung (2) strömungsverbunden ist, mit einem ersten Mischkanal (9) verbindet, welcher mit der ersten Auslassleitung (4) verbunden ist, **dadurch gekennzeichnet, dass** der erste Rohwasserkanal (8) in einen Rohwasserringraum (10) mündet, welcher die Einlassleitung (2) umgibt, wobei in der Wandung (11) der Einlassleitung (2) ein erster Rohwasserdurchgang (12) ausgebildet ist, der den Rohwasserringraum (10) mit dem Inneren der Einlassleitung (2) verbindet und dass der erste Mischkanal (9) in einen ersten Brauchwasserringraum (13) mündet, welcher die erste Auslassleitung (4) umgibt, wobei in der Wandung (14) der ersten Auslassleitung (4) ein erster Brauchwasserdurchgang (15) ausgebildet ist, der den Brauchwasserringraum (13) mit dem Inneren der ersten Auslassleitung (4) verbindet.

2. Mischmodul nach Anspruch 1, **dadurch gekennzeichnet, dass** eine zweite Mischeinrichtung (7) vorgesehen ist, durch welche die zweite Qualität einstellbar ist.

3. Mischmodul nach Anspruch 2, **dadurch gekennzeichnet, dass** die zweite Mischeinrichtung (7) einen zweiten Rohwasserkanal (17), der mit der Einlassleitung (2) strömungsverbunden ist, mit einem zweiten Mischkanal (18) verbindet, welcher mit der Zuleitung (3) für behandeltes Wasser verbunden ist.

4. Mischmodul nach Anspruch 3, **dadurch gekennzeichnet, dass** der zweite Rohwasserkanal (17) in den Rohwasserringraum (10) mündet, welcher die Einlassleitung (2) umgibt, wobei in der Wandung (11) der Einlassleitung (2) ein zweiter Rohwasserdurchgang (19) ausgebildet ist, der den Rohwasserringraum (10) mit dem Inneren der Einlassleitung (2) verbindet.

5. Mischmodul nach Anspruch 3 oder 4, **dadurch gekennzeichnet, dass** der zweite Mischkanal (18) in einen zweiten Brauchwasserringraum (20) mündet, welcher die Zuleitung (3) umgibt, wobei in der Wandung (21) der Zuleitung (3) ein zweiter Brauchwasserdurchgang (22) ausgebildet ist, der den zweiten Brauchwasserringraum (20) mit dem Inneren der Zuleitung (3) verbindet.

6. Mischmodul nach einem der Ansprüche 3 bis 5, **dadurch gekennzeichnet, dass** die zweite Mischeinrichtung (7) ein Stellelement (23) aufweist, durch welches das Maß der Strömungsverbindung zwischen dem zweiten Rohwasserkanal (17) und dem zweiten Mischkanal (18) einstellbar ist.

7. Mischmodul nach einem der Ansprüche 3 bis 6, **dadurch gekennzeichnet, dass** der zweite Rohwasserkanal (17) und der zweite Mischkanal (18) in eine Mischkammer (24) münden, von der ein Ableitungskanal (25) zur zweiten Auslassleitung (6) führt, wobei der Ableitungskanal (25) vorzugsweise durch ein Absperrelement (26) verschließbar ist.

8. Mischmodul nach einem der Ansprüche 1 bis 7, **dadurch gekennzeichnet, dass** die erste Mischeinrichtung (5) ein Steuerelement (16) aufweist, durch welches das Maß der Strömungsverbindung zwischen dem ersten Rohwasserkanal (8) und dem ersten Mischkanal (9) einstellbar ist.

9. Mischmodul nach Anspruch 8, **dadurch gekennzeichnet, dass** das Steuerelement (16) händisch oder automatisch mittels eines Stellmotors bedienbar ist.

10. Mischmodul nach einem der Ansprüche 1 bis 9, **dadurch gekennzeichnet, dass** zwischen der ersten Auslassleitung (4) und der Zuleitung (3) ein Rückflussverhinderungselement (27) angeordnet ist, welches den Rückfluss von Brauchwasser aus der ersten Auslassleitung (4) in die Zuleitung (3) verhindert.

11. Mischmodul nach einem der Ansprüche 1 bis 10, **dadurch gekennzeichnet, dass** das Mischmodul an eine Vorrichtung zur Wasserbehandlung anflanschbar ist.

12. Vorrichtung zur Wasserbehandlung mit einem Mischmodul nach einem der Ansprüche 1 bis 11.

## Claims

1. Mixing module for a device for water treatment, comprising a base body (1) having an inlet line (2) for untreated water, a supply line (3) for water treated by the device for water treatment, a first outlet line (4) for service water of a first quality, a first mixing means (5) to produce the service water of a first quality, and a second outlet line (6) for service water of a second quality, the first mixing means (5) connecting a first untreated water duct (8), which is flow-connected to the inlet line (2), to a first mixing duct (9), which is connected to the first outlet line (4), **characterised in that** the first untreated water duct (8) opens into an untreated water annular space (10) which encloses the inlet line (2), a first untreated water passage (12) being formed in the wall (11) of the inlet line (2) and connecting the untreated water annular space (10) to the interior of the inlet line (2), and **in that** the first mixing duct (9) opens into a first service water annular space (13) which encloses the first outlet line (4), a first service water passage (15) being formed in the wall (14) of the first outlet line (4) and connecting the service water annular space (13) to the interior of the first outlet line (4).

2. Mixing module according to claim 1, **characterised in that** a second mixing means (7) is provided, by means of which the second quality can be adjusted.

3. Mixing module according to claim 2, **characterised in that** the second mixing means (7) connects a second untreated water duct (17), which is flow-connected to the inlet line (2), to a second mixing duct (18), which is connected to the supply line (3) for treated water.

4. Mixing module according to claim 3, **characterised in that** the second untreated water duct (17) opens into the untreated water annular space (10) which encloses the inlet line (2), a second untreated water passage (19) being formed in the wall (11) of the inlet line (2) and connecting the untreated water annular space (10) to the interior of the inlet line (2).

5. Mixing module according to either claim 3 or 4, **characterised in that** the second mixing duct (18) opens into a second service water annular space (20) which encloses the supply line (3), a second service water passage (22) being formed in the wall (21) of the supply line (3) and connecting the second service water annular space (20) to the interior of the supply line (3).

6. Mixing module according to any of claims 3 to 5, **characterised in that** the second mixing means (7) has an adjustment element (23), by means of which the extent of the flow connection between the second untreated water duct (17) and the second mixing duct (18) can be adjusted.

7. Mixing module according to any of claims 3 to 6, **characterised in that** the second untreated water duct (17) and the second mixing duct (18) open into a mixing chamber (24), from which a discharge duct (25) leads to the second outlet line (6), the discharge duct (25) preferably being sealable by means of a blocking element (26).

8. Mixing module according to any of claims 1 to 7, **characterised in that** the first mixing means (5) has a control element (16), by means of which the extent of the flow connection between the first untreated water duct (8) and the first mixing duct (9) can be adjusted.

9. Mixing module according to claim 8, **characterised in that** the control element (16) is operable manually or automatically by means of an actuator.

10. Mixing module according to any of claims 1 to 9, **characterised in that** a backflow prevention element (27) is arranged between the first outlet line (4) and the supply line (3) and prevents service water from flowing back out of the first outlet line (4) into the supply line (3).

11. Mixing module according to any of claims 1 to 10, **characterised in that** the mixing module can be flange-mounted on a device for water treatment.

12. Device for water treatment comprising a mixing module according to any of claims 1 to 11.

## Revendications

1. Module de mélange pour un dispositif de traitement de l'eau, comprenant un corps de base (1) avec une conduite d'entrée (2) pour une eau brute, une conduite d'alimentation (3) pour une eau traitée par le dispositif de traitement de l'eau, une première conduite de sortie (4) pour une eau sanitaire d'une première qualité, un premier dispositif de mélange (5) pour produire l'eau sanitaire d'une première qualité, et avec une deuxième conduite de sortie (6) pour l'eau sanitaire d'une deuxième qualité, le premier dispositif de mélange (5) reliant un premier canal d'eau brute (8), qui est en liaison fluidique avec la conduite d'entrée (2), à un premier canal de mélange (9) qui est relié à la première conduite de sortie (4), **caractérisé en ce que** le premier canal d'eau brute (8) débouche dans un espace annulaire d'eau brute (10) qui entoure la conduite d'entrée (2), un premier passage d'eau brute (12) étant formé dans la paroi (11) de la conduite d'entrée (2), lequel relie l'espace annulaire d'eau brute (10) à l'intérieur de la conduite d'entrée (2) et que le premier canal de mélange (9) débouche dans un premier espace annulaire d'eau sanitaire (13) qui entoure la première conduite de sortie (4), un premier passage d'eau sanitaire (15) étant formé dans la paroi (14) de la première conduite de sortie (4), lequel relie l'espace annulaire d'eau sanitaire (13) à l'intérieur de la première conduite de sortie (4).

2. Module de mélange selon la revendication 1, **caractérisé en ce qu'**un deuxième dispositif de mélange (7) est prévu au moyen duquel la deuxième qualité peut être réglée.

3. Module de mélange selon la revendication 2, **caractérisé en ce que** le deuxième dispositif de mélange (7) relie un deuxième canal d'eau brute (17), qui est en liaison fluidique avec la conduite d'entrée (2), à un deuxième canal de mélange (18) qui est relié à la conduite d'alimentation (3) pour l'eau traitée.

4. Module de mélange selon la revendication 3, **caractérisé en ce que** le deuxième canal d'eau brute (17) débouche dans l'espace annulaire d'eau brute (10) qui entoure la conduite d'entrée (2), un deuxième passage d'eau brute (19) étant formé dans la paroi (11) de la conduite d'entrée (2), lequel relie l'espace annulaire d'eau brute (10) à l'intérieur de la conduite d'entrée (2).

5. Module de mélange selon la revendication 3 ou 4, **caractérisé en ce que** le deuxième canal de mélange (18) débouche dans un deuxième espace annulaire d'eau sanitaire (20) qui entoure la conduite d'alimentation (3), un deuxième passage d'eau sanitaire (22) étant formé dans la paroi (21) de la conduite d'alimentation (3), lequel relie le deuxième espace annulaire d'eau sanitaire (20) à l'intérieur de la conduite d'alimentation (3).

6. Module de mélange selon l'une des revendications 3 à 5, **caractérisé en ce que** le deuxième dispositif de mélange (7) présente un élément de réglage (23) au moyen duquel les proportions de la liaison fluidique entre le deuxième canal d'eau brute (17) et le deuxième canal de mélange (18) peut être réglée.

7. Module de mélange selon l'une des revendications 3 à 6, **caractérisé en ce que** le deuxième canal d'eau brute (17) et le deuxième canal de mélange (18) débouchent dans une chambre de mélange (24) de laquelle un canal d'évacuation (25) mène à la deuxième conduite de sortie (6), le canal d'évacuation (25) pouvant de préférence être fermé par un élément de fermeture (26).

8. Module de mélange selon l'une des revendications 1 à 7, **caractérisé en ce que** le premier dispositif de mélange (5) présente un élément de commande (16) au moyen duquel les proportions de la liaison fluidique entre le premier canal d'eau brute (8) et le premier canal de mélange (9) peut être réglée.

9. Module de mélange selon la revendication 8, **caractérisé en ce que** l'élément de commande (16) peut être actionné manuellement ou automatiquement au moyen d'un servomoteur.

10. Module de mélange selon l'une des revendications 1 à 9, **caractérisé en ce qu'**un élément anti-retour (27) est disposé entre la première conduite de sortie (4) et la conduite d'alimentation (3), lequel empêche le retour d'eau sanitaire de la première conduite de sortie (4) dans la conduite d'alimentation (3).

11. Module de mélange selon l'une des revendications 1 à 10, **caractérisé en ce que** le module de mélange peut être monté par bride sur un dispositif de traitement de l'eau.

12. Dispositif de traitement de l'eau comportant un module de mélange selon l'une des revendications 1 à 11.
